# EUROPEAN PATENT APPLICATION

(11) **EP 4 847 961 A1**
(43) Date of publication of application: **02.12.2026**
(21) Application number: 25907644.6
(22) Date of filing: 18.07.2025
(51) Int. Cl.: G01S 13/86, G06T 7/70, G01S 7/40, G06V 20/56, G01S 13/931

(54) **CONSTRUCTION EQUIPMENT SAFETY SYSTEM, AND METHOD FOR IMPROVING OBJECT DETECTION ACCURACY BY FUSING MULTIPLE PIECES OF SENSOR DATA INCLUDED IN CONSTRUCTION EQUIPMENT SAFETY SYSTEM**

(30) Priority: 16.12.2024 KR 20240187047
(71) Applicant: Hyundai M Systems Corporation, Suwon-si, Gyeonggi-do 16681 (KR)
(72) Inventor: CHANG, Taehwa, Yongin-si Gyeonggi-do 17066 (KR); LEE, Jonggeun, Yongin-si Gyeonggi-do 16844 (KR)
(74) Representative: Isarpatent
(86) International application number: PCT/KR2025/010621
(87) International publication number: WO 2026/134504

(57) **Abstract**

The present disclosure relates to a construction equipment safety system and a method for improving detection accuracy of an object by fusing a plurality of sensor data included in the construction equipment safety system. A method according to an embodiment of the present disclosure comprises: a data collection step of collecting, from a sensor unit including a camera and a radar, sensor data detecting the object; and a coordinate fusion step of fusing coordinates of the sensor data of the camera and the radar included in the sensor unit, wherein the coordinate fusion step is characterized in that a correction of aligning position coordinate data of the sensor data collected in the data collection step based on the installation positions of the camera and the radar is performed.

## Description

### TECHNICAL FIELD

The present disclosure relates to a construction equipment safety system and a method for improving detection accuracy of an object by fusing a plurality of sensor data included in the construction equipment safety system. According to the present disclosure, by fusing coordinates of data detected by a plurality of radars and a plurality of cameras installed on construction equipment, accuracy of object recognition can be improved, and object recognition and obstacle determination specialized for a safety system of construction equipment can be performed.

### BACKGROUND OF THE INVENTION

Various sensors are used for the safety of workers on numerous pieces of construction equipment operated at construction sites.

Generally, as a commonly used sensor, a camera capable of recognizing a surrounding environment through an image may be mentioned. With the recent integration of artificial intelligence, technology for distinguishing whether an object approaching the surroundings is a person or a general object is being applied to cameras.

In addition to cameras that collect images, radar sensors are also widely used. As is well known, a radar sensor is a sensor that transmits electromagnetic waves and analyzes reflected signals to measure a distance, speed, direction, and the like, to an object.

In this case, for safety at a construction site, since a distance to an object must be accurately measured, a radio wave-based sensor such as a radar is of great help. However, in the case of a radar, identification information of an object other than the distance and position coordinates to the object cannot be known. For example, it is impossible to know what kind of detected object it is (e.g., whether it is a person or a geographic feature).

On the other hand, as described above, a camera to which artificial intelligence technology capable of recognizing an object is integrated can distinguish the type of the object, but position data such as a distance to the object is detected less accurately than a radar.

Therefore, when a radar and a camera are installed and used together on construction equipment, they can complement each other to detect an object more accurately. In this case, a technology for fusing and processing data of each sensor is essentially required, which is also referred to as sensor fusion.

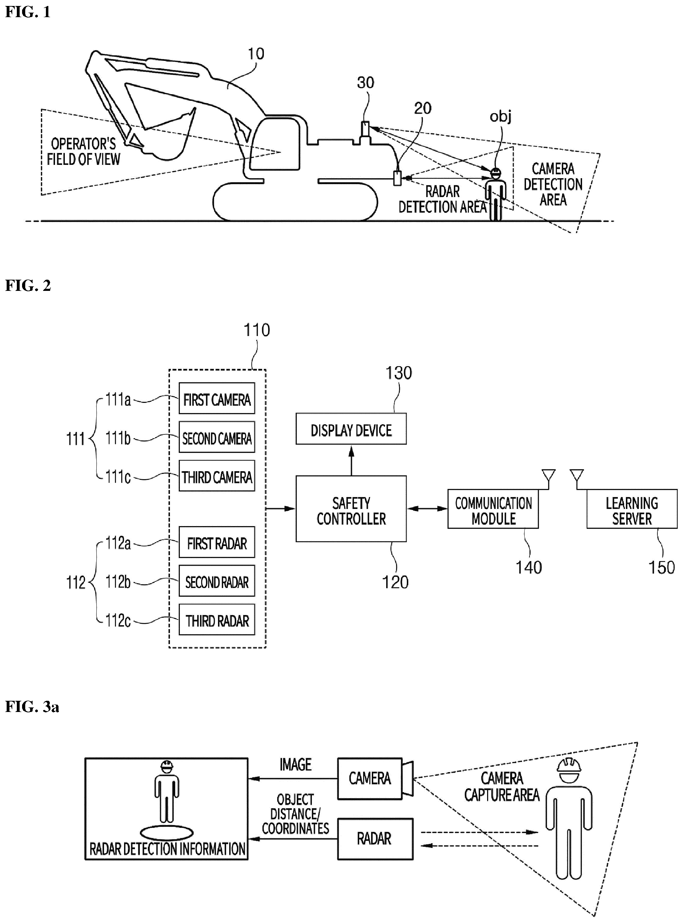

Meanwhile, as shown in FIG. 1, in the case of construction equipment 10, a camera 30 is installed at a relatively high position to have a downward-looking field of view, and a radar 20 has a field of view looking forward at a lower position than the camera in consideration of reflection components. Such a difference in field of view is a factor that makes sensor fusion in construction equipment more difficult than in a vehicle in which two sensors are generally installed to have a field of view in the same direction.

In addition, in the case of a safety system applied to a vehicle, since the main purpose is to prevent collision with an object during driving, it is important to accurately detect all obstacles regardless of distance and direction. However, in the case of a safety system applied to construction equipment, since the main purpose is to prevent collision with an object during work, it becomes more important to accurately and quickly detect an object within a moving range of a working device.

### SUMMARY OF THE INVENTION

### TECHNICAL PROBLEM

An object of an embodiment of the present disclosure is to provide a system and a method capable of accurately detecting a position and a distance of an object by fusing sensor data of the object detected by a plurality of radars and a plurality of cameras.

Also, an object of an embodiment of the present disclosure is to provide a system and a method capable of allowing construction equipment to quickly and accurately detect a dangerous object by intensively sensing an area having the highest risk of collision with an object during work.

However, the problems to be solved by the present disclosure are not limited to the aforementioned problems, and other unmentioned problems will be clearly understood based on the following description.

### TECHNICAL SOLUTION

According to an embodiment of the present disclosure, a method for improving detection accuracy of an object by fusing a plurality of sensor data, performed by a construction equipment safety system, may comprise: a data collection step of collecting sensor data detecting the object from a sensor unit including a camera and a radar; and a coordinate fusion step of fusing coordinates of the sensor data of the camera and the radar included in the sensor unit.

Alternatively, the coordinate fusion step may comprise performing a correction of aligning position coordinate data of the sensor data collected in the data collection step based on the installation positions of the camera and the radar.

Alternatively, the coordinate fusion step may comprise: a radar coordinate generation step of generating three-dimensional radar coordinate data for the position of the object using distance and azimuth data of the object, measured by the radar; a camera coordinate conversion step of converting two-dimensional pixel coordinate data for the position of the object measured by the camera into three-dimensional camera coordinate data; and a coordinate correction step of performing a correction of aligning the radar coordinate data and the camera coordinate data in position by reflecting a relative position difference between the radar and the camera installed on construction equipment.

Alternatively, the sensor unit may comprise a plurality of radars installed at different positions.

Alternatively, the radar coordinate generation step may comprise: respectively generating, for each of the plurality of radars, radar local coordinate data for the position of the object using distance and azimuth data of the object, measured by each radar; and converting the respective local coordinate data into radar world coordinate data by reflecting the installation position and the installation angle of each radar, and then determining objects overlappingly positioned at the same coordinate value as a single object.

Alternatively, the sensor unit may comprise a plurality of cameras installed at different positions.

Alternatively, the camera coordinate conversion step may comprise: respectively converting two-dimensional pixel coordinate data of each of the plurality of cameras into camera normalized coordinate data based on intrinsic parameters of each camera; converting each camera normalized coordinate data into camera local coordinate data by reflecting distance data measured by the radar for each coordinate value thereof; and converting the respective camera local coordinate data into camera world coordinate data by reflecting the installation position and the installation angle of each camera, and then determining objects overlappingly positioned at the same coordinate value as a single object.

Alternatively, the coordinate correction step may comprise performing, on the three-dimensional radar coordinate data, a transformation of reflecting a difference in installation position and installation angle between the camera and the radar installed on the construction equipment to align coordinates thereof with respect to the camera.

Alternatively, the data collection step may comprise removing an error component of the data based on a distance to the object and an intensity of a reflected wave from the object, measured by the radar.

Alternatively, the coordinate fusion step may comprise: setting a region of interest (ROI) based on a distance to the object measured by the radar only when the distance is within a preset threshold distance, and removing radar data deviating from the ROI from a target of the coordinate fusion.

Alternatively, the ROI may be set only to a predetermined area around a working device of construction equipment based on the position of the working device.

According to an embodiment of the present disclosure, a construction equipment safety system may comprise: a sensor unit installed on construction equipment and including a camera and a radar; and a safety controller configured to receive, from the camera and the radar, sensor data detecting an object, and to fuse coordinates of the sensor data of the camera and the radar.

Alternatively, the safety controller may be configured to perform a correction of aligning position coordinate data of the sensor data based on the installation positions of the camera and the radar.

Alternatively, the safety controller may be configured to: set an ROI based on a distance to the object measured by the radar only when the distance is within a preset threshold distance, and remove radar data deviating from the ROI from a target of the coordinate fusion.

Alternatively, the ROI may be set only to a predetermined area around a working device of the construction equipment based on the position of the working device.

### ADVANTAGEOUS EFFECTS

According to at least one embodiment of the present disclosure, by fusing sensor data of an object detected by a plurality of radars and a plurality of cameras, reflecting a measurement distance of the radar on depth information of the camera, and aligning coordinates by reflecting installation positions and angles of respective sensors, it is possible to accurately detect a position and a distance of the object.

Also, according to at least one embodiment of the present disclosure, by setting an area having the highest risk of collision with an object during work as an ROI based on a distance and/or coordinates detected by the radar, and excluding sensor data of an object deviating from the region of interest from a target of data fusion between sensors, it is possible for construction equipment to quickly and accurately detect a dangerous object.

### BRIEF DESCRIPTION OF THE DRAWINGS

FIG. 1 is a diagram showing a field of view of each of a camera and a radar installed on construction equipment.
FIG. 2 is a block diagram showing components performing functions of a construction equipment safety system according to an embodiment of the present disclosure.
FIG. 3 is a diagram for explaining an example in which coordinates of a plurality of sensors are aligned by fusing sensor data according to the present disclosure.
FIG. 4 is a flowchart showing a flow of a method according to an embodiment of the present disclosure.
FIG. 5 is a flowchart showing a detailed flow of a coordinate fusion step of the flowchart of FIG. 4.
FIG. 6 is a diagram showing an overlapping detection area between a plurality of radars.
FIG. 7 is a diagram showing overlapping detection areas of respective cameras and an example of determining overlappingly detected objects as a single object.

### DETAILED DESCRIPTION OF THE EMBODIMENTS

Hereinafter, embodiments of the present disclosure will be described in detail with reference to the accompanying drawings so that a person of ordinary skill in the art to which the present disclosure pertains can easily implement the same. The embodiments presented in the present disclosure are provided to enable a person of ordinary skill in the art to use or implement the content of the present disclosure. Accordingly, various modifications to the embodiments of the present disclosure will be apparent to a person of ordinary skill in the art. That is, the present disclosure may be embodied in many different forms and is not to be construed as limited to the embodiments set forth herein.

Throughout the specification of the present disclosure, the same or similar reference numerals refer to the same or similar components. Furthermore, for clarity of description of the present disclosure, reference numerals for parts unrelated to the description of the present disclosure in the drawings may be omitted.

The term "or" as used in the present disclosure is intended to mean an inclusive "or" rather than an exclusive "or". That is, unless otherwise specified or clear from the context, "X uses A or B" is to be understood to mean any of the natural inclusive permutations. For example, if "X uses A or B" is used in the present disclosure, unless otherwise specified or clear from the context, it may be interpreted as any of the cases where X uses A, X uses B, or X uses both A and B.

The term "at least one of A or B" as used in the present disclosure is to be interpreted as referring to all of A, B, and a combination of A and B.

The term "and/or" as used in the present disclosure is to be understood to refer to and include all possible combinations of one or more of the associated listed concepts.

The terms "comprises" and/or "comprising" as used in the present disclosure are to be understood to mean the presence of a specific feature and/or component. However, the terms "comprises" and/or "comprising" are to be understood as not precluding the presence or addition of one or more other features, other components, and/or combinations thereof.

In the present disclosure, unless otherwise specified, or unless it is clear from the context that a singular form is intended, generally the singular is to be interpreted to include "one or more".

The term "N-th (where N is a natural number)" as used in the present disclosure may be understood as an expression used to distinguish components of the present disclosure from each other according to a certain standard, such as a functional perspective, a structural perspective, or for convenience of explanation. For example, in the present disclosure, components that perform different functional roles may be distinguished as a first component or a second component. However, components that are substantially the same within the technical spirit of the present disclosure but need to be distinguished for convenience of explanation may also be distinguished as a first component or a second component.

The term "connection" as used in the present disclosure is to be interpreted as including not only a case where components are "directly connected," but also a case where another component "exists" therebetween, and a case where the components are "electrically connected" with another component interposed therebetween.

Meanwhile, the term "module" or "unit" as used in the present disclosure may be understood as a term referring to an independent functional unit that processes computing resources, such as a computer-related entity, firmware, software, or a portion thereof, hardware or a portion thereof, or a combination of software and hardware. A "module" or a "unit" may be a unit configured as a single element, or a unit expressed as a combination or a set of a plurality of elements. For example, in a narrow sense, a "module" or a "unit" may refer to a hardware element of a computing device or a set thereof, an application program that performs a specific function of software, a processing procedure implemented through software execution, or a set of instructions for program execution. Furthermore, in a broad sense, a "module" or a "unit" may refer to a computing device itself that constitutes a system, or an application executed on the computing device. However, the above-mentioned concepts are only examples, and the concepts of "module" or "unit" may be variously defined within the scope understandable by a person of ordinary skill in the art based on the content of the present disclosure.

The foregoing description of the terms is for the purpose of aiding the understanding of the present disclosure. Therefore, it is to be noted that if the foregoing terms are not explicitly stated as limiting the content of the present disclosure, they are not used in a sense that limits the technical spirit of the content of the present disclosure.

Hereinafter, an embodiment of the present disclosure is described in detail with reference to the accompanying drawings.

FIG. 2 is a block diagram showing components performing functions of a construction equipment safety system according to an embodiment of the present disclosure.

Referring to FIG. 2, a construction equipment safety system 100 according to an embodiment of the present disclosure may include a sensor unit 110 and a safety controller 120. In this case, the construction equipment safety system 100 may be installed on construction equipment 10 of FIG. 1.

In an embodiment of the present disclosure, the construction equipment 10 is described by taking an excavator as an example, but is not limited thereto. In the case of the excavator taken as an example, a working device referred to in the present disclosure may include a bucket, an arm, a boom, and the like.

The sensor unit 110 may detect an object around the construction equipment 10. The sensor unit 110 may include a camera unit 111 including one or more cameras 111a through 111c and a radar unit 112 including one or more radars 112a through 112c.

In FIG. 2, the camera unit 111 and the radar unit 112 are illustrated as including three cameras and three radars, respectively, but this is merely an example, and the cameras and the radars may be installed in a larger quantity than three, or only one of each may be installed. Also, the number of installed cameras and the number of installed radars may not match each other.

Each of the cameras and the radars is installed at a position capable of looking at the outside of the construction equipment 10. For example, a first camera 111a and a first radar 112a may be installed on a left side of the construction equipment 10. For example, a second camera 111b and a second radar 112b may be installed on a right side of the construction equipment 10. For example, a third camera 111c and a third radar 112c may be installed on a rear side of the construction equipment 10.

In the above example, it is described that the sensors are installed only in directions out of a field of view of an operator driving the construction equipment 10 (left, right, and rear directions), but the sensors may be additionally installed in a front direction of the construction equipment 10.

Meanwhile, hereinafter, what is referred to as a camera may be understood as meaning at least one camera included in the camera unit 111, and what is referred to as a radar may be understood as meaning at least one radar included in the radar unit 112.

The safety controller 120 is a component that controls the overall operation of the construction equipment safety system 100.

The safety controller 120 may include any type of device capable of processing data, such as a processor. The "processor" may mean, for example, a data processing device embedded in hardware and having a physically structured circuit for performing a function expressed by code or an instruction included in a program. As an example of the data processing device embedded in hardware as described above, processing devices such as a microprocessor, a central processing unit (CPU), a processor core, a multiprocessor, an application-specific integrated circuit (ASIC), a field programmable gate array (FPGA), a graphics processing unit (GPU), and a neural processing unit (NPU) may be encompassed, but the scope of the present disclosure is not limited thereto.

The safety controller 120 may receive sensor data detecting an object from sensors (the camera and the radar) included in the sensor unit 110. In this case, transmission of the sensor data may be performed through a Controller Area Network (CAN) communication protocol.

Communication between the safety controller 120 and each of the sensors included in the sensor unit 110 may be directly performed, but may also be performed through a main controller (not shown) of the construction equipment 10. The main controller refers to a controller that controls driving operations, working operations, and the like, of the construction equipment 10.

The safety controller 120 may fuse coordinates with respect to the sensor data of the camera and the radar. Details of coordinate fusion of the camera and the radar will be described later.

In addition, the safety controller 120 may determine whether a dangerous situation exists after fusing coordinates of the camera and the radar. The dangerous situation may mean, for example, a situation in which a risk of collision between an object detected by a sensor and the construction equipment 10 is high. The dangerous situation may be determined based on a distance between the working device and the object, a swing direction and speed of the construction equipment 10, an operation type of the working device, and the like.

The construction equipment safety system 100 according to an embodiment of the present disclosure may further include a display device 130.

The display device 130 may display an around-view video generated using one or more cameras, information on an object whose coordinates are fused by the safety controller 120, recognition information of an object determined by artificial intelligence, and the like, as visual information. As a possible embodiment, a warning message for a dangerous situation determined by the safety controller 120 may be further displayed on the display device 130. As a possible embodiment, the display device 130 may be configured as a touch screen.

The construction equipment safety system 100 according to an embodiment of the present disclosure may further include a communication module 140.

The communication module 140 is a component provided to communicate with a learning server 150 to be described later, and may be provided separately from the safety controller 120, or may be included inside the safety controller 120 to constitute a single device. The communication module 140 may apply a wireless communication scheme such as LTE, Wi-Fi, BLE, or a wired communication scheme such as Ethernet.

The construction equipment safety system 100 according to an embodiment of the present disclosure may further include the learning server 150.

As a possible embodiment, the learning server 150 may communicate with the safety controller 120 to recognize and classify an object in an image using the sensor data of the camera (image) received from the safety controller 120, and transmit the result to the safety controller 120. As another possible embodiment, the learning server 150 may communicate with the safety controller 120 so that the safety controller 120 can download and update a learning program stored in the learning server 150. In this case, object recognition may be performed in the safety controller 120 itself.

Meanwhile, for the object recognition mentioned here, a Yolo (You Only Look Once) model, which is widely known to provide excellent performance in analyzing multiple objects, may be used. Since a specific algorithm of the Yolo model is a known technology and is unrelated to the technical spirit of the present disclosure, a detailed description thereof is omitted.

Hereinafter, a method according to an embodiment of the present disclosure is described. Specifically, the method is a method for improving detection accuracy of an object of construction equipment by fusing a plurality of sensor data, and may be performed by the construction equipment safety system 100 described above. More specifically, the present disclosure may be performed by the safety controller 120 of the construction equipment safety system 100.

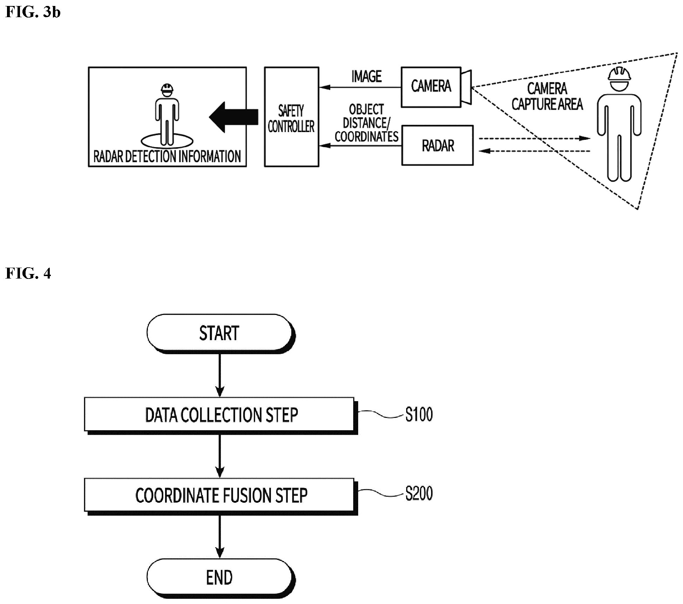

FIG. 3 is a diagram for explaining an example in which coordinates of a plurality of sensors are aligned by fusing sensor data according to the present disclosure.

FIG. 3(a) shows a situation in which coordinate data detected by the camera and the radar for an object do not match each other. This situation occurs due to a difference in installation position and installation angle of each sensor, use of different coordinate systems, and the like.

Meanwhile, in this case, since a distance to the object (a person) detected by the radar cannot be applied to the person seen by the camera, an accurate distance from the construction equipment to the person cannot be known, and there is a problem that detection accuracy is not improved despite applying a plurality of sensors.

FIG. 3(b) shows a situation in which coordinate data for a person detected by the camera and the radar are aligned by applying the method of the present disclosure to be described later. When coordinate data of respective sensors are aligned by fusing sensor data, information on the object of the camera and the radar can be combined to accurately grasp the type of the object, the distance to the object, and the position of the object, thereby improving the detection accuracy of the object, and reducing the risk of a safety accident during work of the construction equipment.

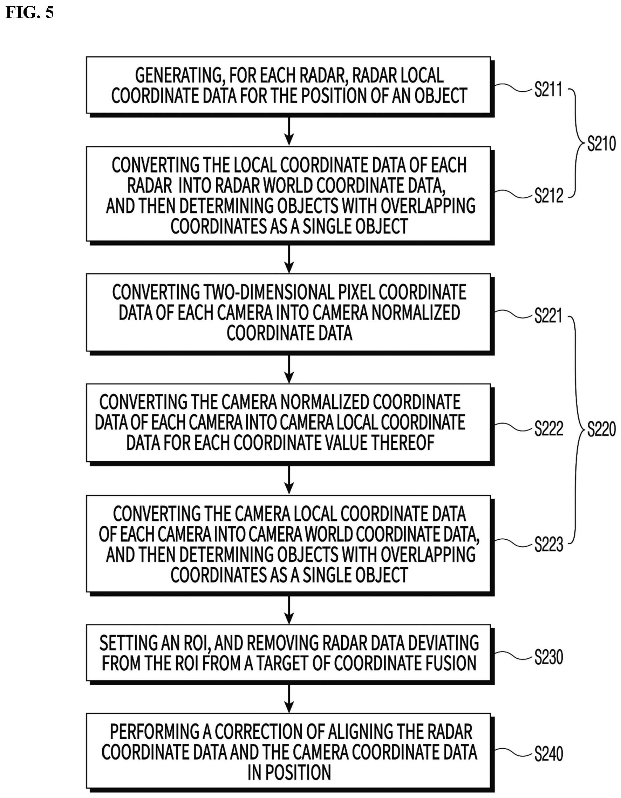

FIG. 4 is a flowchart showing a flow of a method according to an embodiment of the present disclosure, and FIG. 5 is a flowchart showing a detailed flow of a coordinate fusion step of the flowchart of FIG. 4.

First, referring to FIG. 4, the method according to an embodiment of the present disclosure may include a data collection step S100 and a coordinate fusion step S200.

The data collection step S100 is a step of collecting, from a sensor unit 110 including a camera and a radar, sensor data detecting the object.

As described above, the sensor unit 110 may detect an object around the construction equipment 10. The sensor unit 110 may include a camera unit 111 including one or more cameras 111a through 111c and a radar unit 112 including one or more radars 112a through 112c.

In this step, a process of removing an error component of the sensor data based on a distance to the object and an intensity of a reflected wave from the object, measured by the radar, may be performed.

Specifically, the radar transmits radio waves and receives signals reflected from an object to detect the object. In this case, other than the object that actually needs to be detected, an error component reflected and returned from the ground or the like exists. For example, when radio waves are reflected from the ground, a signal may be detected at a position where no object exists as if an object exists due to the radio waves bounced off in an incorrect direction. Such an error component is called clutter, and this clutter component must be primarily removed to improve the detection accuracy of the object and prevent the error component from being included in the subsequent fusion of the sensor data.

As a specific embodiment of clutter removal, clutter removal may be performed based on information on a distance to an object collected in a pre-conducted test process and an intensity of a reflected wave for an object existing at the corresponding distance. That is, when the intensity of the reflected wave is too weak or strong compared to the measured distance to the object, the sensor data detecting the object may be determined as a clutter component and removed.

As such, since clutter removal is performed first, followed by the coordinate fusion step S200, calculation efficiency, speed, and accuracy can be further improved.

The coordinate fusion step S200 is a step of fusing coordinates of the sensor data of the camera and the radar included in the sensor unit 110. In this step, a correction of aligning position coordinate data of the sensor data collected may be performed based on the installation positions of the camera and the radar.

More specifically, referring further to FIG. 5, the coordinate fusion step S200 may include a radar coordinate generation step S210, a camera coordinate conversion step S220, and a coordinate correction step S240.

The radar coordinate generation step S210 is a step of generating three-dimensional radar coordinate data for the position of the object using distance and azimuth data of the object, measured by the radar.

The radar coordinate generation step S210 may respectively generate, for each of the plurality of radars installed at different positions of the construction equipment 10, radar local coordinate data for the position of the object using distance and azimuth data of the object, measured by each radar (S211).

The distance and azimuth data of the object measured by the radar mean refined data from which the clutter component has been removed in the coordinate collection step S100. Since the distance to the object and an angle looking at the object are determined through the distance and azimuth data measured by the radar, three-dimensional radar local coordinate data for the position of the object detected by the corresponding radar is generated.

When local coordinate data are generated for each radar, the individual local coordinate data are converted into radar world coordinate data by reflecting the installation position and the installation angle of each radar, and then objects overlappingly positioned at the same coordinate value are determined as a single object (S212).

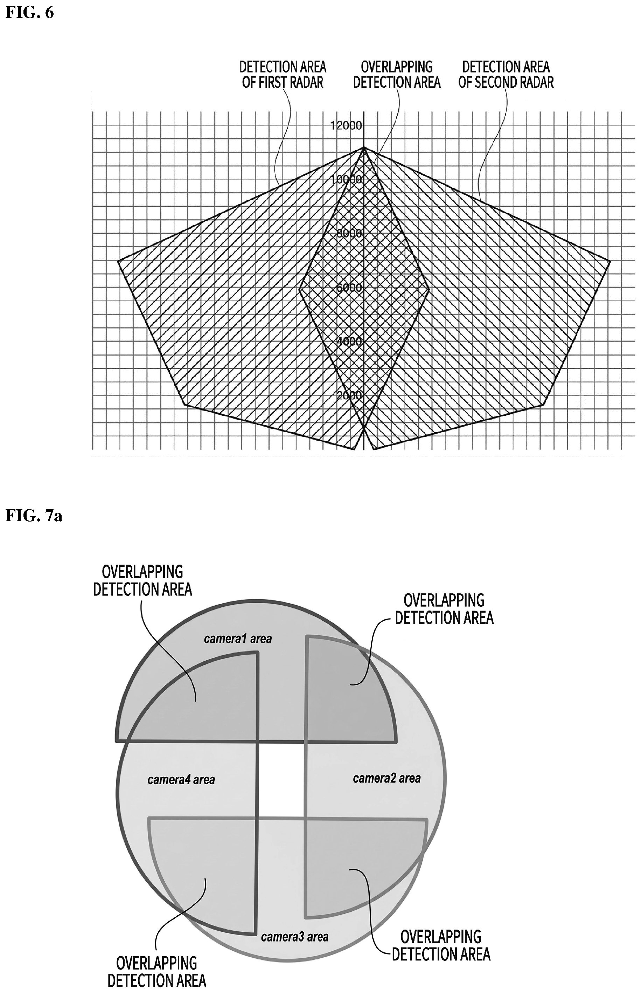

FIG. 6 is a diagram showing an overlapping detection area between a plurality of radars.

Referring to FIG. 6, the first radar and the second radar have different detection areas due to having different installation positions and installation angles, but it can be seen that a certain overlapping detection area exists between the two.

Since the installation position of each radar is different, the local coordinate data of each radar is coordinates with the corresponding radar as the origin. Since the plurality of radars have different reference points, even an overlapping object appears as different local coordinate positions. Therefore, in order to determine that a single object is detected for an overlapping object, it is necessary to convert local coordinate data of each radar into radar world coordinate data based on one radar using the installation position and the installation angle of each radar.

For example, when the first radar is the reference, the second radar and the third radar may convert three radars into world coordinate data through coordinate transformation using a translation matrix and a rotation matrix reflecting the installation position and the installation angle with the first radar.

After converting in this way, overlappingly detected objects whose coordinates of respective radars match are determined as the same object, so that detection accuracy can be further improved.

Next, the camera coordinate conversion step S220 is a step of converting two-dimensional pixel coordinate data for the position of the object measured by the camera into three-dimensional camera coordinate data.

The camera coordinate conversion step S220 may respectively convert two-dimensional pixel coordinate data of each of the plurality of cameras into camera normalized coordinate data based on intrinsic parameters of each camera (S221).

In this case, the intrinsic parameters of the camera are represented by a camera matrix K, and specifically, may be expressed as Matrix 1 below. [MATRIX 1] $K = \left[\begin{matrix}fx & 0 & cx \\ 0 & fy & cy \\ 0 & 0 & 1\end{matrix}\right]$ , where *fx* and *fy* are focal lengths of a camera lens. The focal length is a distance between the lens and an image sensor, and affects a field of view (FOV) and depth. The focal length indicates how much zoom-in or zoom-out is performed in x-axis and y-axis directions during transformation between 3D coordinates and 2D coordinates. *cx* and *cy* are principal points, representing x and y coordinates of the image sensor.

For example, if two-dimensional pixel coordinates are (*u, v*), Equation 1 below may be applied to convert them into camera normalized coordinate data. [EQUATION 1] $\left[\begin{matrix}x \\ y \\ z\end{matrix}\right] = K - 1 ⋅ \left[\begin{matrix}u \\ ν \\ 1\end{matrix}\right]$ , where *K*-1 is the inverse matrix of the camera matrix.

However, the coordinate data converted in this way is normalized coordinate data, and z, which is depth information, is practically represented as 1, which is not substantially accurate three-dimensional position data. Therefore, the depth information of the camera must be supplemented to expand and convert into camera local coordinate data.

The camera coordinate conversion step S220 may convert each camera normalized coordinate data into camera local coordinate data by reflecting distance data measured by the radar for each coordinate value thereof (S222).

In this case, the measured distance data of the radar to be reflected on each normalized coordinate data may be selected as follows.

In the radar coordinate generation step S210, radar world coordinate data has been generated for the plurality of radars. Each coordinate value of the radar world coordinate data can be converted into three-dimensional camera coordinate data. At this time, the installation position and the installation angle of each camera may be reflected, and the reference coordinates of the radar world coordinate data and the corresponding camera (e.g., the first camera) are matched through coordinate transformation using a translation matrix and a rotation matrix.

Thereafter, the radar world coordinate data converted into the three-dimensional camera coordinate data can be converted into two-dimensional pixel coordinate data using the camera matrix K representing the intrinsic parameters of the corresponding camera (the first camera).

Finally, among the pixel coordinate data of the object detected by the corresponding camera (the first camera), data matching the coordinate value of the radar world coordinate data converted into the two-dimensional pixel coordinate data can be found. When the matching camera pixel coordinate data is found, the radar that calculated the matched radar world coordinate data can apply the measured distance to the normalized coordinate data converted into the pixel coordinate data, thereby supplementing the depth information of the camera.

The measured distance of the radar is applied to the camera normalized coordinate data through Equation 2 below, and final camera local coordinate data (X,Y,Z) is calculated. [EQUATION 2] $\begin{matrix}X = x ⋅ d \\ Y = y ⋅ d \\ Z = z ⋅ d\end{matrix}$ , where x, y, and z are respective coordinate values of the camera normalized coordinate data, and d is the measured distance of the radar.

Next, the camera coordinate conversion step S220 each converts individual camera local coordinate data into camera world coordinate data by reflecting the installation position and the installation angle of each camera, and then determines objects overlappingly positioned at the same coordinate value as a single object (S223).

Since the installation position of each camera is different, the local coordinate data of each camera is coordinates with the corresponding camera as the origin. Since the plurality of cameras also have different reference points like the plurality of radars, even an overlapping object appears as different local coordinate positions. Therefore, in order to determine that a single object is detected for an overlapping object, local coordinate data of each camera is converted into camera world coordinate data based on one camera using the installation position and the installation angle of each camera.

For example, when the first camera is the reference, the second camera and the third camera may convert three cameras into world coordinate data through coordinate transformation using a translation matrix and a rotation matrix reflecting the installation position and the installation angle with the first camera.

After converting in this way, overlappingly detected objects whose coordinates of respective cameras match are determined as the same object, so that detection accuracy can be further improved.

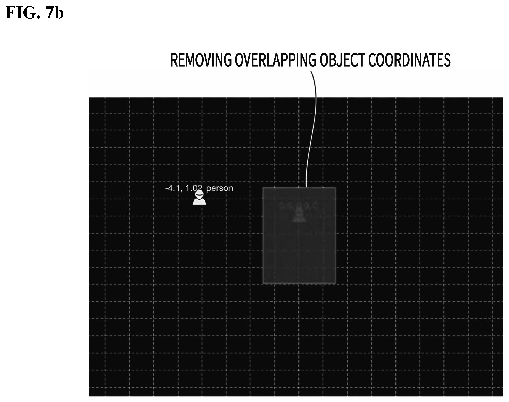

FIG. 7 is a diagram showing overlapping detection areas of respective cameras and an example of determining overlappingly detected objects as a single object.

In FIG. 7(a), an installation example of four cameras is illustrated, and each camera's field of view shows overlapping detection areas at the edges. At this time, when the process of removing overlapping objects as described above is performed, as shown in FIG. 7(b), even if it is actually the same object (or person) but represented by two coordinates, it can be accurately determined as a single object.

The coordinate correction step S240, which is the final step of the coordinate fusion step S200, is a step of performing a correction of aligning the radar coordinate data and the camera coordinate data in position by reflecting a relative position difference between the radar and the camera installed on the construction equipment 10.

The radar coordinate data and the camera coordinate data mean the radar world coordinate data and the camera world coordinate data generated and converted in steps S212 and S223, respectively.

In step S240, a transformation is made to match the data of the camera and the radar to the same three-dimensional coordinate system, and a transformation of reflecting a difference in installation position and installation angle between the camera and the radar installed on the construction equipment 10 is performed on the three-dimensional radar coordinate data to align coordinates thereof with respect to the camera. In this case, a translation matrix and a rotation matrix may be used for the transformation.

For example, in order to convert into a coordinate system from the camera's perspective (reference), a transformation equation such as Equation 3 below may be used. [EQUATION 3] $\left[\begin{matrix}xc \\ yc \\ zc \\ 1\end{matrix}\right] = Mrc ⋅ R θ ⋅ \left[\begin{matrix}xr \\ yr \\ zr \\ 1\end{matrix}\right]$ , where *Mrc* is a matrix representing a translation transformation from the radar to the camera, and *R*θ is a rotation transformation matrix that aligns coordinates by reflecting rotation according to the angle difference.

In this case, an example of the transformation matrix may be as Matrix 2 and Matrix 3 below (where *tx,ty,tz* represent moving distances from the radar origin to the camera origin, and *r*11 _{~} *r*33 represent rotation components (direction vectors) of respective rotation axes). [MATRIX 2] $Mrc = \left[\begin{matrix}1 & 0 & 0 & tx \\ 0 & 1 & 0 & ty \\ 0 & 0 & 1 & tz \\ 0 & 0 & 0 & 1\end{matrix}\right]$ [MATRIX 3] $R θ = \left[\begin{matrix}r 11 & r 12 & r 13 & 0 \\ r 21 & r 22 & r 23 & 0 \\ r 31 & r 32 & r 33 & 0 \\ 0 & 0 & 0 & 1\end{matrix}\right]$

Through such a process, the same object recognized by the camera and the radar can be accurately aligned in a three-dimensional space. Meanwhile, since the camera and the radar are installed at different heights, a correction considering a height difference may be added for correcting a vertical position.

Meanwhile, the coordinate fusion step S200 may further perform a step of setting an ROI based on a distance to the object measured by the radar only when the distance is within a preset threshold distance, and removing radar data deviating from the ROI from a target of the coordinate fusion (S230).

Unlike general passenger cars, the construction equipment 10 travels at a low speed by nature, so safety management against object collision during work in a stopped state is more important than object collision during driving. In addition, in a swing operation during work, the bucket, boom, and arm, which are working devices, are parts having the highest risk of collision with obstacles.

Therefore, unlike a general passenger car, accurate information is not required for detection data of all objects, and it is more important to quickly and accurately detect information on an object with a high risk of collision.

For example, in consideration of a longitudinal dimension of the working device and movement during work of the construction equipment, a distance of approximately 10m from the sensor may be set as a collision risk range. At this time, the above-mentioned threshold distance may be set to 10m. When the distance to the object measured by the radar exceeds 10m, the necessity of coordinate data fusion between camera data and radar data is not great, and such radar data can be removed from the target of coordinate fusion to increase the calculation speed and efficiency of the safety controller 120.

Furthermore, even when a detected object is displayed on the display device 130, a bounding box is processed to be displayed only for the fused object, so that the operator's attention can be focused on the object with a high risk of collision.

As an additional embodiment, the ROI described above may be set only to a predetermined area around the working device of the construction equipment 10 based on the position of the working device. A certain range based on the positions of the bucket, arm, and boom repeatedly mentioned as examples of the working device may be additionally set as the collision risk range. For example, a threshold distance of 10m and a range of 1m in the left and right directions of the working device may be limited as an additional risk range.

On the other hand, the numerical value of the distance range taken as an example here is merely an example, and can of course be varied.

As described above, according to at least one embodiment of the present disclosure, by fusing sensor data of an object detected by a plurality of radars and a plurality of cameras, reflecting a measurement distance of the radar on depth information of the camera, and aligning coordinates by reflecting installation positions and angles of respective sensors, it is possible to accurately detect a position and a distance of the object.

Also, according to at least one embodiment of the present disclosure, by setting an area having the highest risk of collision with an object during work as a region of interest based on a distance and/or coordinates detected by the radar, and excluding sensor data of an object deviating from the region of interest from a target of data fusion between sensors, it is possible for construction equipment to quickly and accurately detect a dangerous object.

The foregoing description of the present disclosure is for illustrative purposes, and a person of ordinary skill in the art to which the present disclosure pertains can understand that the present disclosure can be easily modified into other specific forms without changing the technical spirit or essential features of the present disclosure. Therefore, it is to be understood that the embodiments described above are illustrative in all aspects and not restrictive. For example, each component described as a single type may be implemented in a distributed manner, and likewise, components described as distributed may be implemented in a combined form.

The scope of the present disclosure is defined not by the above detailed description but by the claims set forth below, and it is to be construed that all changes or modified forms derived from the meaning and scope of the claims and their equivalents are included in the scope of the present disclosure.

## Claims

1. A method for improving detection accuracy of an object by fusing a plurality of sensor data, performed by a construction equipment safety system, the method comprising:
a data collection step of collecting, from a sensor unit including a camera and a radar, sensor data detecting the object; and
a coordinate fusion step of fusing coordinates of the sensor data of the camera and the radar included in the sensor unit,
wherein the coordinate fusion step comprises performing a correction of aligning position coordinate data of the sensor data collected in the data collection step based on the installation positions of the camera and the radar.

2. The method of claim 1, wherein
the coordinate fusion step comprises:
a radar coordinate generation step of generating three-dimensional radar coordinate data for the position of the object using distance and azimuth data of the object, measured by the radar;
a camera coordinate conversion step of converting two-dimensional pixel coordinate data for the position of the object measured by the camera into three-dimensional camera coordinate data; and
a coordinate correction step of performing a correction of aligning the radar coordinate data and the camera coordinate data in position by reflecting a relative position difference between the radar and the camera installed on construction equipment.

3. The method of claim 2, wherein
the sensor unit comprises a plurality of radars installed at different positions, and
the radar coordinate generation step comprises:
respectively generating, for each of the plurality of radars, radar local coordinate data for the position of the object using distance and azimuth data of the object, measured by each radar; and
converting the respective local coordinate data into radar world coordinate data by reflecting the installation position and the installation angle of each radar, and then determining objects overlappingly positioned at the same coordinate value as a single object.

4. The method of claim 2, wherein
the sensor unit comprises a plurality of cameras installed at different positions, and
the camera coordinate conversion step comprises:
respectively converting two-dimensional pixel coordinate data of each of the plurality of cameras into camera normalized coordinate data based on intrinsic parameters of each camera;
converting each camera normalized coordinate data into camera local coordinate data by reflecting distance data measured by the radar for each coordinate value thereof; and
converting the respective camera local coordinate data into camera world coordinate data by reflecting the installation position and the installation angle of each camera, and then determining objects overlappingly positioned at the same coordinate value as a single object.

5. The method of claim 2, **characterized in that**
the coordinate correction step comprises performing, on the three-dimensional radar coordinate data, a transformation of reflecting a difference in installation position and installation angle between the camera and the radar installed on the construction equipment to align coordinates thereof with respect to the camera.

6. The method of claim 1, **characterized in that**
the data collection step comprises removing an error component of the data based on a distance to the object and an intensity of a reflected wave from the object, measured by the radar.

7. The method of claim 1, **characterized in that**
the coordinate fusion step comprises setting a region of interest (ROI) based on a distance to the object measured by the radar only when the distance is within a preset threshold distance, and removing radar data deviating from the ROI from a target of the coordinate fusion.

8. The method of claim 7, **characterized in that**
the ROI is set only to a predetermined area around a working device of construction equipment based on the position of the working device.

9. A construction equipment safety system comprising:
a sensor unit installed on construction equipment and including a camera and a radar; and
a safety controller configured to receive, from the camera and the radar, sensor data detecting an object, and to fuse coordinates of the sensor data of the camera and the radar,
**characterized in that** the safety controller is configured to perform a correction of aligning position coordinate data of the sensor data based on the installation positions of the camera and the radar.

10. The construction equipment safety system of claim 9, **characterized in that**
the safety controller is configured to set a region of interest (ROI) based on a distance to the object measured by the radar only when the distance is within a preset threshold distance, and remove radar data deviating from the ROI from a target of the coordinate fusion.

11. The construction equipment safety system of claim 10, **characterized in that**
the ROI is set only to a predetermined area around a working device of the construction equipment based on the position of the working device.
